# EUROPÄISCHE PATENTANMELDUNG

(11) **EP 0 819 804 A2**
(43) Veröffentlichungstag der Anmeldung: **21.01.1998**
(21) Anmeldenummer: 97110996.2
(22) Anmeldetag: 02.07.1997
(51) Int. Cl.: E04F 10/06

(54) **Gelenkarm für eine Gelenkarm-Markise**

(30) Priorität: 19.07.1996 DE 29612532 U
(71) Anmelder: Schmitz-Werke GmbH + Co., D-48282 Emsdetten (DE)
(72) Erfinder: Kröner, Sven, 49497 Mettingen (DE)
(74) Vertreter: Schneck, Herbert, Dipl.-Phys., Dr.

(57) **Zusammenfassung**

Bei einem Gelenkarm (9) für eine Gelenkarm-Markise, wobei der Gelenkarm (9) einen inneren und einen äußeren Gelenkarmabschnitt (15, 16) umfaßt, die über ein Schwenkgelenk (10) miteinander verbunden sind, wobei zwischen dem inneren und dem äußeren Gelenkarm (9) eine Gasfeder (17) angeordnet ist, die den Gelenkarm (9) in Richtung auf eine gestreckte Position beaufschlagt, ist eine Verstelleinheit (20) zur Verstellung der Länge der Gasfeder (17) im ausgefahrenen Zustand vorgesehen, um unter Wahrung der grundsätzlichen Vorteile einer derartigen Gasfederanordnung einen Gelenkarm der gattungsgemäßen Art so weiterzubilden, daß fertigungsbedingte Toleranzen, die zu einer Fehlorientierung des Ausfallrohrs führen, leicht ausgleichbar sind.

## Beschreibung

Die Erfindung richtet sich auf einen Gelenkarm für eine Gelenkarm-Markise, wobei der Gelenkarm einen inneren und einen äußeren Gelenkarm-Abschnitt umfaßt die über ein Schwenkgelenk miteinander verbunden sind, und wobei zwischen dem inneren und äußeren Gelenkarm eine Gasfeder angeordnet ist, die den Gelenkarm in Richtung auf seine gestreckte Position beaufschlagt.

Eine Markise mit einem derartigen Gelenkarm ist aus der DE 26 19 175 A1 bekannt. Hinsichtlich der Vorteile der Verwendung einer Gasfeder im Vergleich zu ansonsten üblichen Schraubenfedern wird dort ausgeführt, daß Gasfedersysteme einfach und gefahrlos, nämlich im kraftlosen Zustand, montierbar seien, und daß die exakte Einstellbarkeit der Federkennung den bei einer Markise auftretenden Beanspruchungen besonders entgegenkomme. Zudem sei bei Verwendung einer Gasfeder im Bereich des Knickgelenks die Federkraft auch in der weitesten Ausfahrstellung der Markise noch verfügbar und die Gasfeder wirke einem Anheben der ausgefahrenen Markise durch eine einfallende Windboe ebenso wie der durch das anschließende Zurückfallen der Markise auftretende Belastung durch ihre Dämpfungswirkung entgegen.

Aus der DE 26 40 796 C2 ist ein Gelenkarm bekannt, bei welchem die Gasfeder in einem Hohlraum eines Gelenkarmabschnitts angeordnet ist und ein Zugelement zur Übertragung der Federkraft vorgesehen ist.

Hiervon ausgehend liegt der Erfindung die Aufgabe zugrunde, unter Wahrung der grundsätzlichen Vorteile einer derartigen Gasfederanordnung einen Gelenkarm der gattungsgemäßen Art so weiterzubilden, daß fertigungsbedingte Toleranzen, die zu einer Fehlorientierung des Ausfallrohrs führen, leicht ausgleichbar sind.

Diese Aufgabe wird erfindungsgemäß dadurch gelöst, daß eine Verstelleinheit zur Verstellung der Länge der Gasfeder im ausgefahrenen Zustand vorgesehen ist. Aufgrund der hierdurch möglichen Längenveränderungen der Gasdruckfeder ist der Öffungswinkel des Gelenkarmes veränderbar und das Ausfallrohr kann so justiert werden, daß es exakt parallel zur Wickelwelle verläuft.

Günstigerweise ist weiterhin vorgesehen, daß die Verstelleinheit einen Gelenkkopf zur Anlenkung an einem Gelenkabschnitt aufweist, der mit einem Gewindeansatz mit einem Innen- oder Außengewinde versehen ist, der auf ein korrespondierendes Außen- oder Innengewinde der Kolbenstange der Gasdruckfeder zur Längeneinstellung aufschraubbar ist. Dementsprechend kann die Längeneinstellung mittels einer einfachen Schraubbewegung vorgenommen werden.

Der Gelenkkopf kann an dem äußeren Gelenkarm-Abschnitt vorteihafterweise derart angelenkt sein, daß der Anlenkpunkt etwa entsprechend der Hälfte des Hubes vom Schwenkpunkt des Gelenks der Gelenkarm-Abschnitte entfernt ist. Hierdurch werden besonders vorteilhafte Kräfteverhältnisse erzielt.

Schließlich kann noch vorgesehen sein, daß die Gasfeder eine flache Federkraftkennlinie aufweist, was z.B. durch eine Gasfeder mit relativ großem Gasvolumen erzielbar ist.

Nachfolgend wird die Erfindung anhand eines bevorzugten Ausführungsbeispiels in Verbindung mit der Zeichnung näher erläutert. Dabei zeigen:
- Fig. 1: eine perspektivische Ansicht einer gattungsgemäßen Gelenkarm-Markise,
- Fig. 2a bis c: einen erfindungsgemäßen Gelenkarm in verschiedenen Ausfahrzuständen und
- Fig. 3a und b: eine erfindungsgemäße Verstelleinheit bei unterschiedlicher Längeneinstellung.

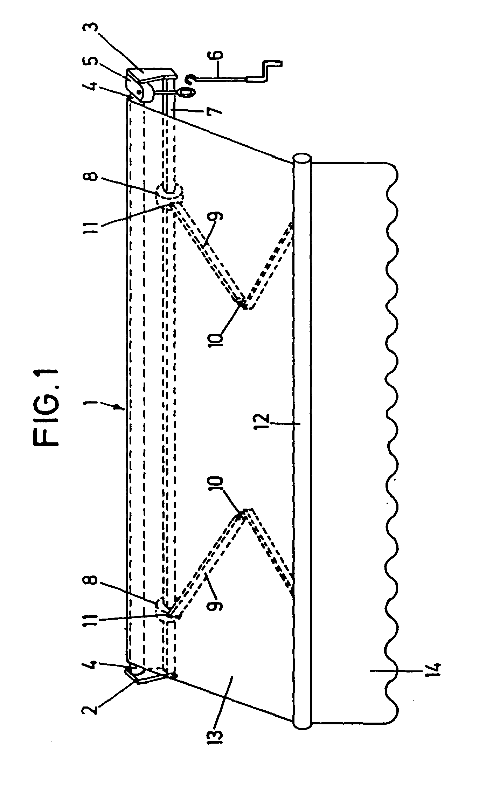

Die in der Zeichnung dargestellte Markise weist eine an einer Hauswand oder dergleichen zu befestigende Trageinrichtung 1 auf, die mit einer in Lagerplatten 2, 3 drehbar gelagerten Wickelwelle 4 versehen ist. Diese Wickelwelle 4 ist in bekannter Weise drehantreibbar, und zwar gemäß der Darstellung in Fig. 1 mittels eines selbsthemmenden Getriebes 5, das wiederum über eine ein- bzw. aushängbare Kurbelstange 6 antreibbar ist. Anstelle des Getriebes 5 mit Kurbelstange 6 kann selbstverständlich auch - wie allgemein bekannt - ein elektromotorischer Antrieb, ein Gurtantrieb oder dergleichen eingesetzt werden. Als Teil der Trageinrichtung 1 ist weiterhin zwischen den Lagerplatten 2 und 3 ein Tragrohr 7 mit quadratischem Querschnitt angebracht, an dem mittels jeweils einer Halte- und Neigungs-Verstell-Einrichtung 8 Gelenkanne 9 in sogenannter Scherenausführung angebracht sind. Diese Gelenkarme 9 sind jeweils in ihrer Mitte geteilt und mit einem Schwenkgelenk 10 mit vertikaler Achse versehen. Die Geelenkarme 9 sind jeweils mit einem gleichartigen Schwenkgelenk 11 an der entsprechenden Einrichtung 8 und - in der Zeichnung nicht erkennbar - mit einem entsprechenden Schwenkgelenk an einem Ausfallrohr 12 angelenkt, so daß das Ausfallrohr 12 in einer mit der Wickelwelle 4 gemeinsamen Ebene verschoben werden kann, aber keine Bewegungen senkrecht zu dieser Ebene ansführen kann.

An der Wickelwelle 4 ist ein rechteckiges Markisentuch 13 befestigt, das durch die geschilderten Drehungen der Wickelwelle 4 auf diese auf- bzw., von dieser abgewickelt werden kann. Das Markisentuch 13 ist weiterhin in allgemein bekannter Weise an dem Ausfallrohr 12 festgelegt. An dem Ausfallrohr 12 ist ein nach unten hängender Volant 14 befestigt.

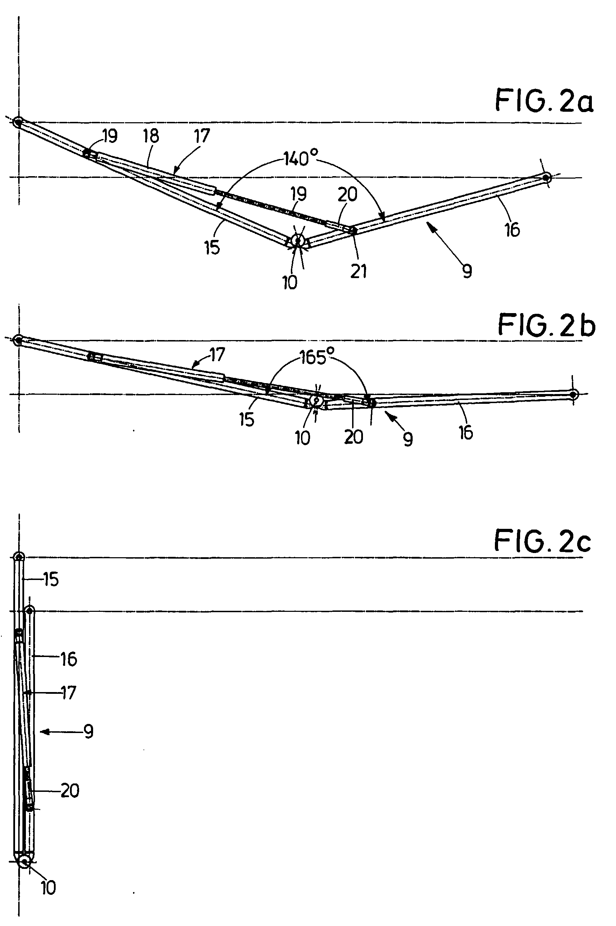

In Fig. 2 ist ein erfindungsgemäßer Gelenkarm 9 mit einem inneren Gelenkarmabschnitt 15 und einem äußeren Gelenkarmabschnitt 16 dargestellt, wobei eine Gasfeder 17 zwischen den beiden Gelenkarmabschnitten 15, 16 das Schwenkgelenk 10 überbrückend angeordnet ist. Der Zylinder 18 der Gasfeder 17 ist über ein Schwenkgelenk 19 mit dem inneren Gelenkarmabschnitt 15 verbunden und der Kolben 19 über eine Verstelleinheit 20 und ein Gelenk 21 mit dem äußeren Gelenkarmabschnitt 16.

In der Zeichnung sind verschiedene Ausfährzustände veranschaulicht, so z.B. in Fig. 2a eine mittlere Ausfahrstellung mit einem Winkel von 140° zwischen den Gelenkarmabschnitten 15, 16, in Fig. 2b eine maximale Ausfahrstellung mit einem Winkel von 165° zwischen den Gelenkarmabschnitten 15, 16 und in Fig. 2c der eingefahrene Zustand des Gelenkarms.

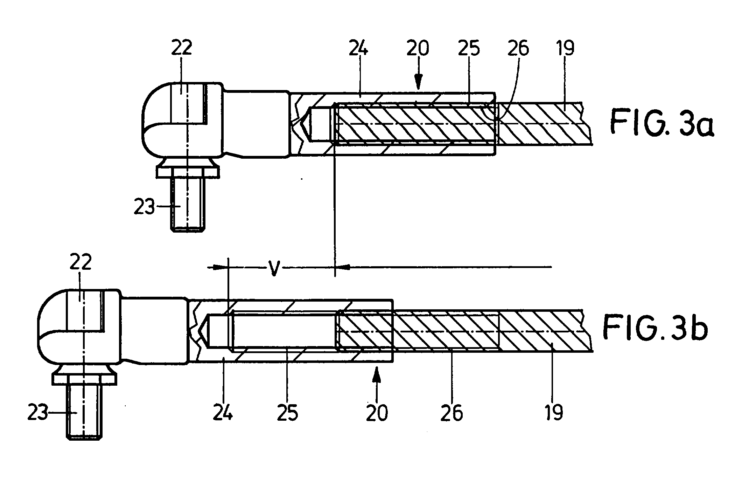

Zur Erzielung einer optimalen Anpaßbarkeit und Justierbarkeit ist die Verstelleinheit 20 vorgesehen, die in Fig. 3 - teilweise geschnitten - dargestellt ist.

Die Verstelleinheit 20 umfaßt einen Gelenkkopf 22 mit einem Gelenkzapfen 23, wobei sich an den Gelenkkopf 22 ein Gewindeansatz 24 mit einem Innengewinde 25 anschließt.

An dem äußeren Ende des Kolbens 19 ist ein Außengewinde 26 ausgebildet, welches in das Innengewinde 25 einschraubbar ist. Durch eine relative Verdrehung zwischen Gelenkkopf 22 und Kolben 19 kann die effektive Länge der Gasfeder 17 um eine Verstellstrecke V verändert werden.

## Patentansprüche

1. Gelenkarm für eine Gelenkarm-Markise, wobei der Gelenkarm einen inneren und einen äußeren Gelenkarmabschnitt umfaßt, die über ein Schwenkgelenk miteinander verbunden sind, wobei zwischen dem inneren und dem äußeren Gelenkarm eine Gasfeder angeordnet ist, die den Gelenkarm in Richtung auf eine gestreckte Position beaufschlagt, dadurch gekennzeichnet, daß eine Verstelleinheit (20) zur Verstellung der Länge der Gasfeder (17) im ausgefahrenen Zustand vorgesehen ist.

2. Gelenkarm nach Anspruch 1, dadurch gekennzeichnet, daß die Verstelleinheit (20) einen Gelenkkopf (22) zur Anlenkung an einem Gelenkarmabschnitt (15) aufweist, der einen Gewindeansatz (24) mit einem Innen- (25) oder Außengewinde (26) aufweist, der auf ein korrepondierendes Außen- (26) oder Innengewinde (25) der Kolbenstange (19) der Gasfeder (17) zur Längeneinstellung aufschraubbar ist.

3. Gelenkarm nach Anspruch 1, dadurch gekennzeichnet, daß der Gelenkkopf (22) an dem äußeren Gelenkarmabschnitt (16) derart angelenkt ist, daß der Anlenkpunkt etwa entsprechend der Hälfte des Hubes von der Schwenkachse des Gelenks (10) der Gelenkarmabschnitte (15, 16) entfernt ist.

4. Gelenkarm nach Anspruch 1, dadurch gekennzeichnet, daß die Gasfeder (17) eine flache Kennlinie aufweist.
